# EUROPEAN PATENT SPECIFICATION

(11) **EP 1 836 755 B1**
(45) Date of publication and mention of the grant of the patent: **16.11.2011**
(21) Application number: 05819730.2
(22) Date of filing: 22.11.2005
(51) Int. Cl.: H02H 3/06, H02H 1/00

(54) **APPARATUS FOR THE REMOTE RESETTING OF AN ELECTRICAL DEVICE**
VORRICHTUNG ZUM FERNRÜCKSETZEN EINER ELEKTRISCHEN EINRICHTUNG
APPAREIL PERMETTANT DE REMETTRE A ZERO A DISTANCE UN COMPTEUR

(30) Priority: 16.12.2004 IT RM20040609
(43) Date of publication of application: 26.09.2007
(73) Proprietor: Occhiuzzi, Angelo, 67051 Avezzano AQ (IT)
(72) Inventor: Occhiuzzi, Angelo, 67051 Avezzano AQ (IT)
(74) Representative: Romano, Giuseppe
(86) International application number: PCT/IB2005/053868
(87) International publication number: WO 2006/064385

(56) References cited:
- EP-A- 1 005 133
- DE-A1- 10 248 640
- US-A1- 2003 006 905
- US-B1- 6 577 963

## Description

The present invention relates to an apparatus for the remote reactivation of electrical devices in general and, in particular, of devices operating for monitoring and limiting the maximum power which a given plant can absorb from the main supply mains.

The present invention results particularly useful for resetting the counters measuring the single-phase, three-phase electric energy consumption and/or for applying in industrial systems; the switches in general and, in particular, switches of the magneto-thermal kind, that is differential relays.

The existing safety rules, sanctioned by the italian Law 46/90, now and then make necessary to integrate in the electric system of each environment, destined to housing or productive use, devices apt to provide a protection against occurrences such as the electric current dispersion, possible short circuits or overcharges due to excessive consumption.

In this regard, a problem of practical order is well known, arising when the conditions, for example of overcharge or short circuit, take place which cause such protecting devices to interrupt the electric energy supply or distribution to the electric systems of houses, plants and buildings in general.

The main drawback shown by the protecting devices according to the known art originates from the fact that, due to constructive and design needs, in most cases they are not positioned in the environments wherein the user moves and operates so as to result them convenient and immediately accessible to him/her.

In fact, such protecting devices are generally located in places which cannot be reached directly, for example in mutual spaces of the apartment blocks, usually obtained in the underground; in the understairs of the palaces; outer gates in case of independent buildings such as villas or the like.

All this translates into a remarkable discomfort for the end user which is obliged to interrupt the activities wherein he/she is engaged, in case to go out or descend the stairs of one or more floors, or even to cover considerable distances to reach the location wherein the protecting devices mentioned above are positioned, in order to proceed to a manual resetting thereof.

The discomforts are as much more stressed as greater are the distances to be covered and hard are the atmospherical conditions which in case a user has to face (bright sunlight, rain, snow, wind).

Furthermore, in may cases the current failure does not allow to activate several automatized devices of common use in the modem daily life, such as electrical gates, electro-mechanisms for unlocking main gates or roll-up blinds and the like, which unsuccessful correct operation produces considerable troubles and an increase in the discomfort mentioned above. An apparatus for remote resetting a protection device, according to the preamble of claim 1 which can partly alleviate the mentioned inconveniences is known from EP 1 005 135.

In the prior art apparatuses it is not possible to know, in real time, the reason thereto the interruption of the electric energy distribution to the involved system can be attributed, in the case in point if the interruption has occurred due to the unsetting the counter, of the magneto-thermal switch and/or of the differential switch or due to the temporary interruption of the electric energy supply by the supplying authority.

At present, there are no apparatuses which, in whole observance of the safety rules, provide an effective solution to the discomforts which a user has to face in the situations mentioned above and which altogether are configurated with a simple conception, easy installation and comfortable use.

Then, the object of the present invention is to solve the problems mentioned above, by proposing an apparatus as defined in claim 1.

Thanks to its versatility, the resetting apparatus according to the present invention can be advantageously used in different application fields to meet the corresponding contingent needs.

In fact, the introduction of the resetting apparatus according to the present invention allows meeting the need of some commercial activities, such as for example butcheries, bakeries, firms producing deep-frozen food, of not interrupting the cold chain for long time, considering the perishability of the treated products.

Analogously, some institutions operating in the field of the public or private healthcare, such as hospitals or blood banks and the like, have the need of maintaining the drugs or biological material at low temperature in specific refrigerating rooms.

Thanks to a ready and effective resetting of the involved electric devices by means of the apparatus according to the present invention, the economic damages and the risks coming from a possible and not rare interruption of electric energy supply from the supplying authority are advantageously minimized.

A similar advantage can be taken from using the resetting apparatus according to the present invention in the domestic field, so that the temporary interruption of electric energy supply in private houses does not involve the loss of what is kept in the refrigerating systems.

The apparatus according to the present invention constitutes a valid solution for the manual resetting of switches and counters, for a congruous number of people, especially disabled persons and elderly, who have deambulatory difficulties and they would have great difficulties in making movements under critical conditions such as those which create during lack of electric energy.

Additional advantages of the resetting apparatus according to the present invention lie in that it is cheap to manufacture, easy to install and to set-up, as well as comfortable to use at the same time.

Furthermore, the resetting apparatus according to the present invention is characterized by a particular sturdiness and essentiality of the components.

Advantageously, it provides the possibility of interfacing with radio-mobile telecommunication networks of mobile kind, as well as with the Internet network, so as to be able to be remotely operated in an effective way, by means of information transmission modes which utilize tools of ever wider use in the modem life, for example sms messages and e-mail.

As mentioned above, such results are obtained without jeopardizing the safety of the users' electrical systems, thanks to the adoption of particular technical solutions which in any case guarantee the correct operation of the switches and the counters whereon the resetting apparatus is assembled, even in case that such apparatus should not be working.

In fact, the resetting apparatus according to the present invention does not interfere with the normal functions of the switches and counters mentioned above.

Additional advantages, as well as the features and the application modes of the present invention will be evident from the following detailed description of a preferred embodiment thereof, shown by way of example and not for limitative purposes, as well as some variants thereof, by referring to the figures of the enclosed drawings wherein:
- figure 1 is a front and top perspective view of a peripheral unit belonging to the apparatus according to a preferred embodiment of the present invention;
- figure 2 is a front perspective cut-away and top view of the inside of the peripheral unit of figure 1;
- figure 3 is a front view illustrating a control unit belonging to the resetting apparatus according to the embodiment of figure 1 of the present invention, such control unit being placed onto an upper surface of a measuring counter;
- figure 4 is a side view representing a detail of the connection between the resetting means placed on the control unit of figure 3 and a switch of the measuring counter mentioned above;
- figure 5 is partially sectioned top view illustrating a detail of the resetting means placed onto the control unit of figure 3, according to the embodiment of figure 1 of the present invention;
- figure 6 is a front perspective, cut-away and top view of the inside of the control unit of figure 3;
- figures 7A and 7B are perspective views illustrating two subsequent phases of the operation of the resetting apparatus, according to the embodiment of figure 1 of the present invention;
- figure 8 is a side view representing a detail of a safety embodiment variant of the resetting means of figure 5, integrating the assembly of a mono-directional bearing;
- figure 9 is a partially sectioned view illustrating an operating mode of the resetting apparatus according to the embodiment of figure 1 of the present invention;

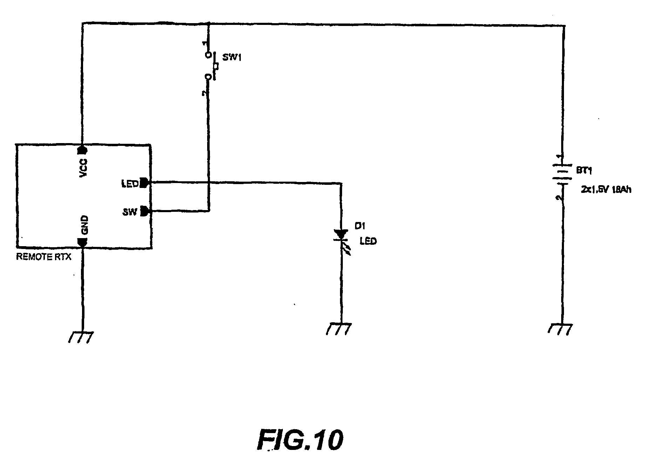

- figure 10 is a schematization of the structure of the peripheral unit of figure 1, showing the electrical connections between the components thereof;

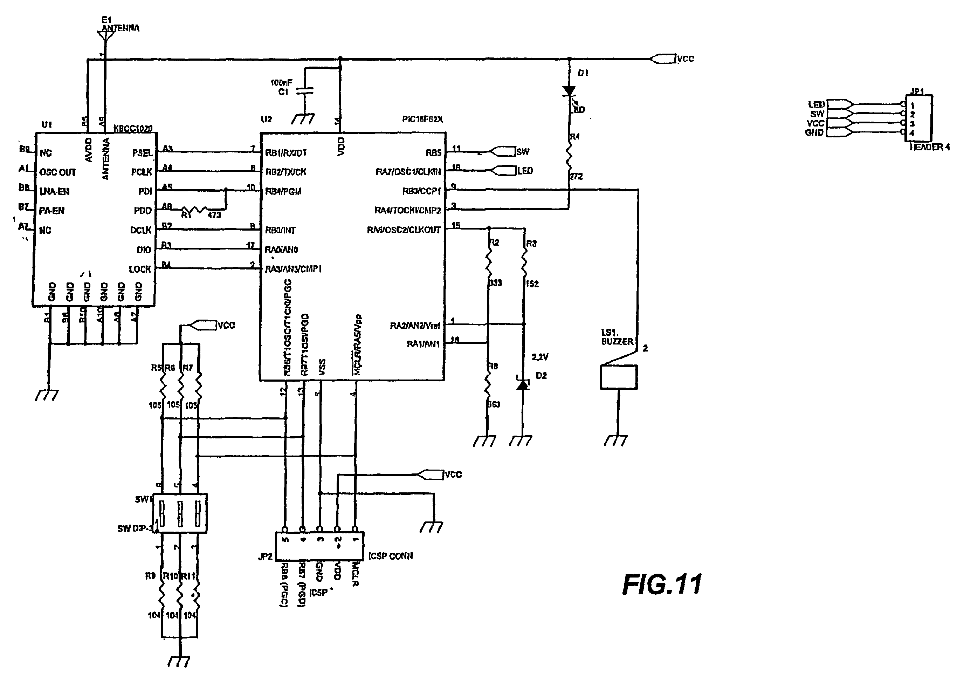

- figure 11 briefly illustrates a transceiving circuit comprised in the schematization of figure 10;

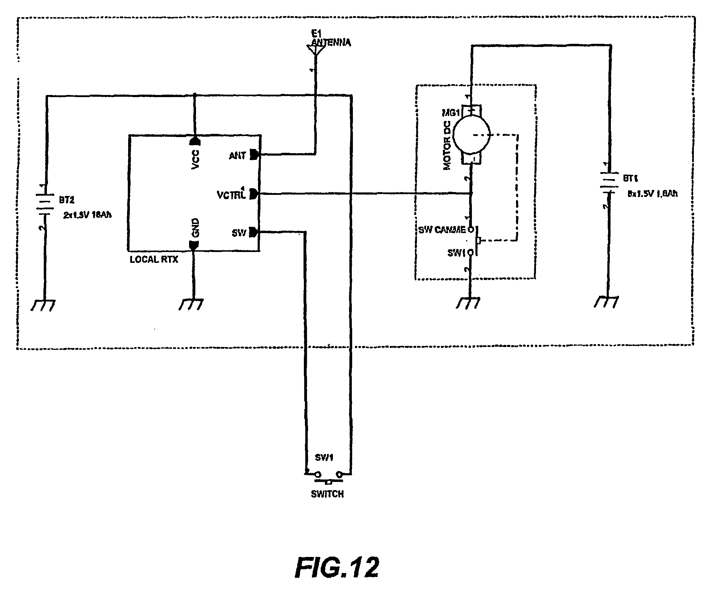

- figure 12 is a schematization of the structure of the control unit of figure 6, showing the electrical connections between the components thereof;

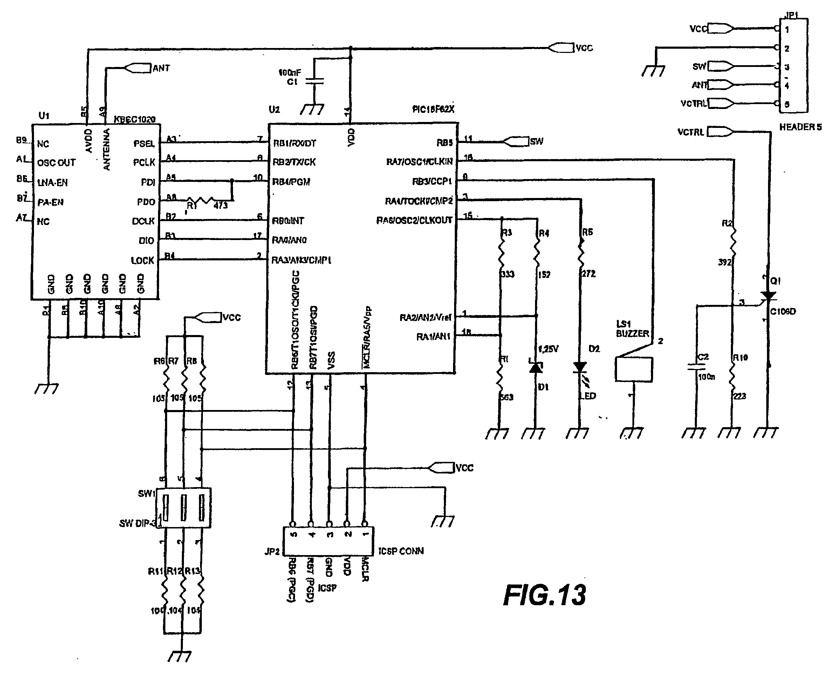

- figure 13 briefly illustrates a transceiving circuit comprised in the schematization of figure 12; and

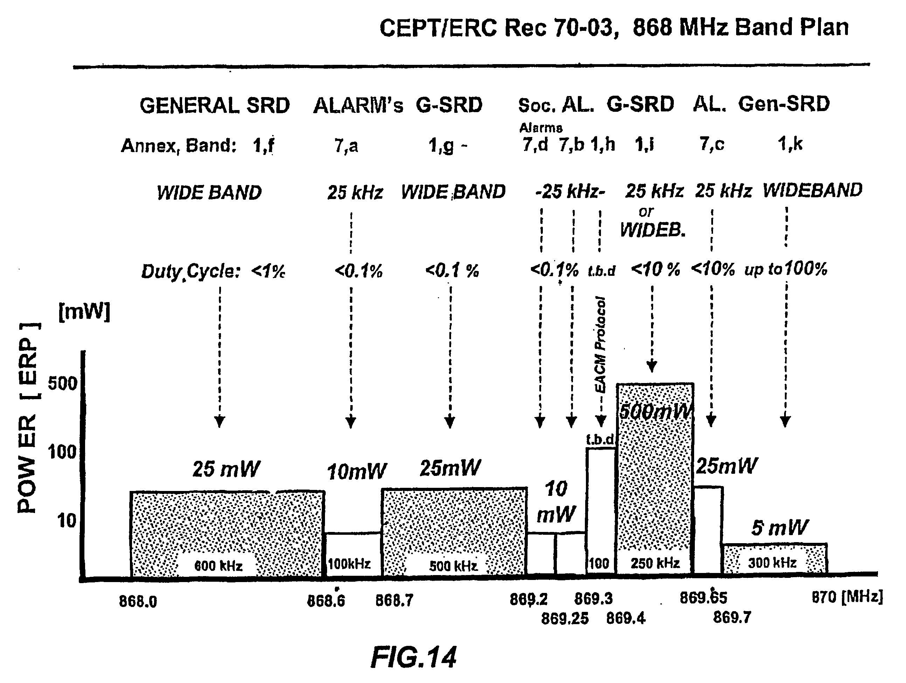

- figure 14 is a graph showing a plurality of frequency intervals of a signal emitted depending upon the power of the signal itself, wherein the representation of a frequency band is included, comprised between 868,0 and 868,6 MHz, particularly suitable to the reception and transmission of a radio-frequency signal for the resetting apparatus as in the figures 7A and 7B.

In order to describe the present invention the figures mentioned above will be referred hereinafter.

An apparatus 1 according to the present invention is apt to reset a general device 100 for interrupting the electric energy supplied by the main supply mains.

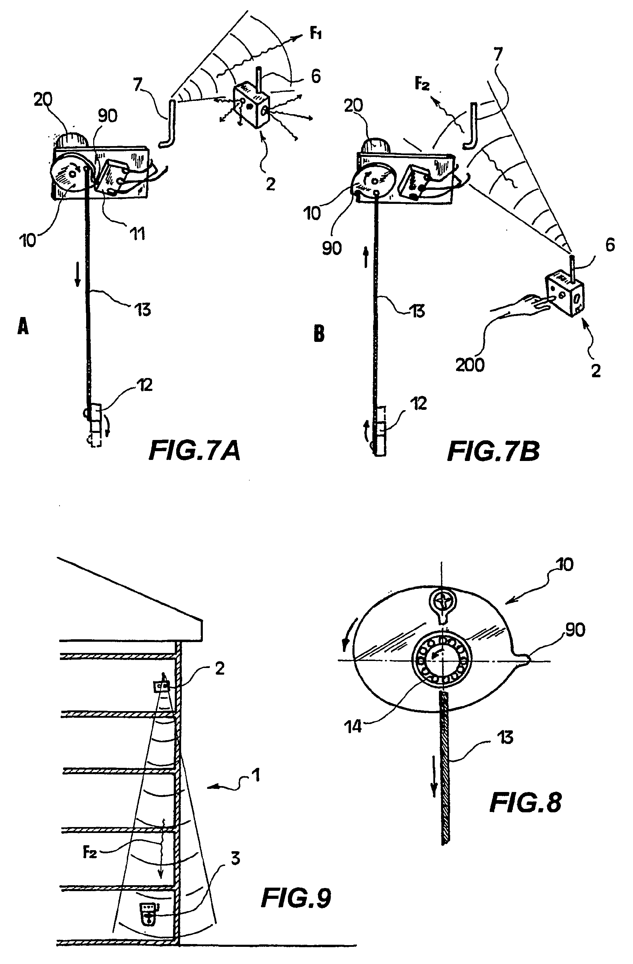

As exemplified in figures 7A and 7B, a common configuration of such device 100 provide a switch 12 apt to switch between a first reset state "a" and a second unset state "b".

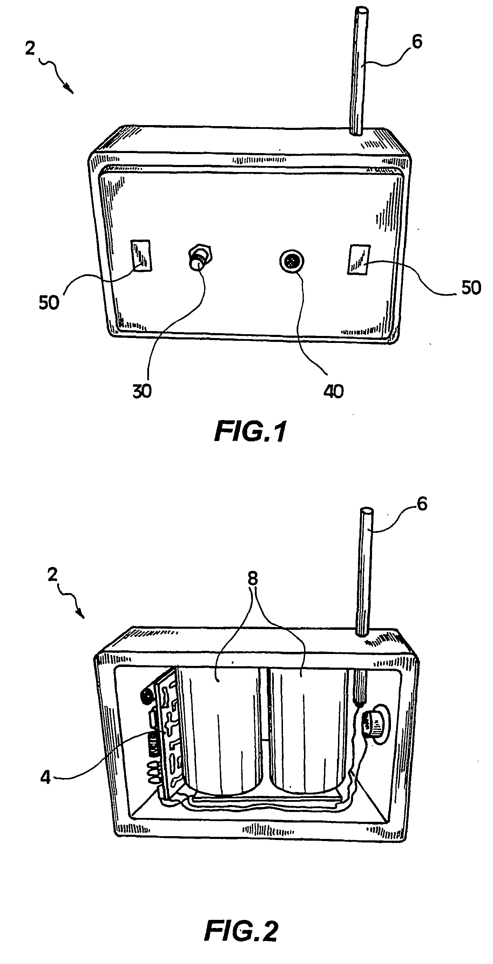

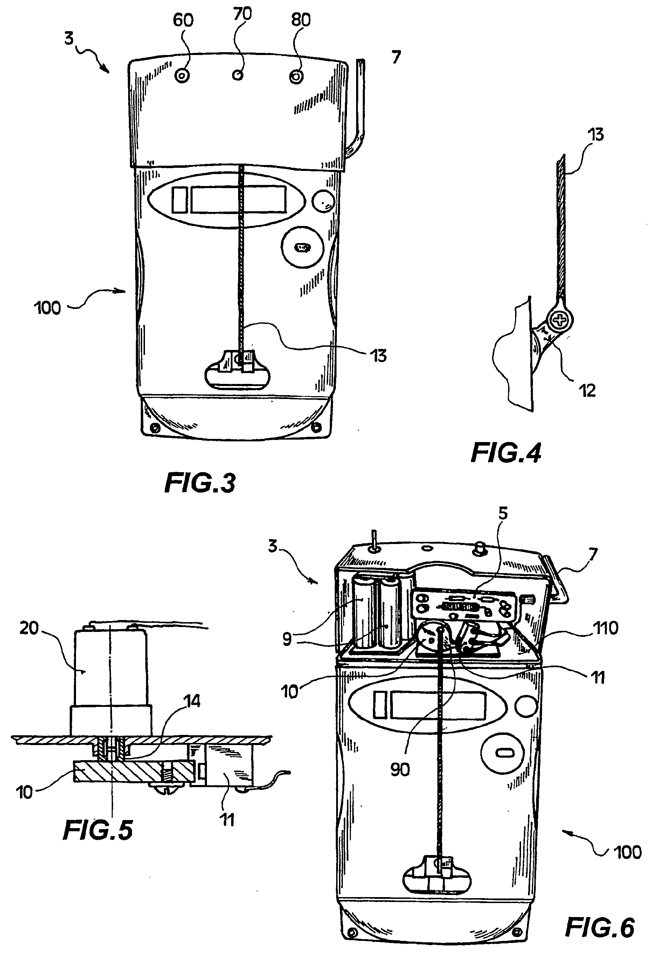

By respectively referring to figures 2 and 6, the apparatus 1 comprises a first peripheral unit 2 for remotely controlling the resetting of the device 100, and a second control unit 3.

The peripheral unit 2 is destined to be placed in remote position with respect to the device 100, preferably within the reach of a user 200, whereas the control unit 3 is located at the device 100.

Preferably, the control unit is arranged in a lifted position with respect to the device 100.

According to a preferred embodiment of the present invention here described in detail, the control unit is arranged onto a resting base 110 placed on a surface of the device 100.

Such resting base 110 advantageously can be shielded with respect to the underneath device 100.

It is provided that the peripheral unit 2 and the control unit 3 are power-supplied by external supply mains or by respective batteries 8 and 9.

Considering the possibility that the primary source power supply can be temporary interrupted, the batteries 8 and 9 can be of the buffer kind.

Furthermore, it is provided the possibility that both units 2 and 3 comprise respective means for signalling the exhaustion of the batteries.

The control unit 3 can comprise a turn-on and turn-off switch 60, for the temporary interruption of the operation of the apparatus 1.

Furthermore, it can comprise a device 70 for signalling the state of its own operation and a test button 80 to verify the correct operation of the apparatus 1.

The peripheral unit 2 and the control unit 3 are in bi-directional communication.

The bi-directional communication mentioned above is established between first reception and transmission means of the peripheral unit 2 and corresponding second transmission and reception means of the control unit 3.

By referring to figures 2, 6, 7A and 7B, according to the embodiment mentioned above of the present invention, the peripheral unit 2 and the control unit 3 have a substantially box-like structure and the respective means mentioned above for transmitting and receiving the signals are of radio-frequency kind.

In particular, the transmission and reception means of the peripheral unit 2 comprises a radio card 4 and an antenna 6, whereas the corresponding transmission and reception means of the control unit 3 comprises a radio card 5 and an antenna 7.

The radio card 4 of the peripheral unit 2 is preferably programmed with a specific identification code, so as to be selectively activated, without creating interferences with other possible radio cards of respective peripheral units located within the radio range of the control unit 3.

Analogously, the radio card 5 of the control unit 3 is programmed with corresponding identification codes of the peripheral units which are intended in bi-directional communication with the control unit 3.

The control unit 3 comprises means for detecting the state of the device 100 and means for resetting the device 100.

The configuration of the resetting apparatus 1 is so that, every time the detecting means detects the unset state "b" of the device 100, the control unit emits a corresponding warning signal F1, which is transmitted to the peripheral unit 2.

The control unit 3 also comprises means for resetting the device 100.

In the case in point, as it can be seen in figure 5, the resetting means comprises a motor reducer 20 on the rotating shaft thereof an eccentric member 10, substantially shaped like a cam, can be keyed.

Such resetting means further comprises connection means 13, revolvingly assembled between a first end constrained onto the switch 12 of the device 100 and a second end constrained on the eccentric member 10.

In this way, the eccentric member 10 transforms the rotating motion of the shaft of the motor reducer 20 in alternating motion of the connection means 13.

Such connection means 13 can be, for example, of the kind with stretched cable, that is shaped like a stiff rod.

The means for detecting the state of the device 100 comprises, for example, a contact tooth 90, integrated in the eccentric member 10, apt to cooperate with a sensor 11, for example of the electro-mechanical kind.

The sensor 11 and the contact tooth 90 substantially constitute the switch of a corresponding circuit for detecting the state of the device 100.

The closing or opening of such detecting circuit implements, respectively, when the tooth 90 comes in contact with the sensor 11 and when the tooth 90 detaches from the sensor 11.

As illustrated in figure 7A, the structure of the apparatus 1 is sized during the design phase so that the detecting circuit is in the closed position thereof when the device 100 in the reset state "a".

When the switch 12 of the device 100 snaps downwards in the unset state "b", the connection means 13 drags the eccentric member 10, with consequent contact loss between the tooth 90 and the sensor 11.

In this way, the sensor 11 activates the transmission of the warning signal F1 to the involved peripheral unit 2, when the detecting circuit switches from the closed to the opened condition.

The signal F1 is picked up by the antenna 6 of the peripheral unit and therefore means for signalling the unset state of the device 100 are activated.

Such signalling can be of visual type, for example by means of a LED 40, or of acoustic type, for example by means of a buzzer 50 apt to emit a warning sound.

For the purpose of the real execution of the resetting of the device 100, the peripheral unit 2 comprises means for activating the transmission means 4 and 6, apt to emit a resetting signal F2 directed to the control unit 3.

Such activating means can be selectively operated by a user 200 to arrange the resetting of the device 100 and they can be shaped like a switch, as it can be seen in figure 1.

Alternatively, the functions of the activating means are implemented by a biometric sensor, for example a detector of the fingerprints, or by an electronic key, for example of the badge-like type.

According to an embodiment variant of the apparatus 1, the activation means can comprise a phone combiner connected to a radio-mobile telecommunication network of mobile kind, for example of the second generation kind such as the GSM and GPRS systems, or of the third generation kind such as the UMTS system.

The combiner can establish a communication with a mobile terminal, such as a mobile phone, so that a user 200 can arrange the resetting of the device 100, for example, by sending a sms text message.

It is provided the option for remotely controlling the resetting signal F2 by means of the Internet network, thanks to the integration in said actuation means of specific means for connecting to said network.

When the resetting signal F2 is received by the control unit 3, the motor reducer 20 is operated again so that the cam, by rotating, causes the lifting of the switch 12 of the device 100, to return then to the initial position corresponding to the reset state "a" of the device 100.

Advantageously, a user 200 can verify the correct result of the resetting operation for example by controlling the visual signalling means mentioned above on the peripheral unit 2.

The apparatus 1 is designed and configurated so that, when the device 100 is in the reset state "a", the resetting means however allows the free switching thereof, so as to guarantee always conditions of maximum safety.

To this purpose, a particular technical solution is adopted, illustrated in figure 8, which provides the assembly of the eccentric member 10 on the shaft of the motor reducer 20 with interposition of a member 14 substantially shaped like a mono-directional bearing.

Such member like a mono-directional bearing 14 is apt to carry out a double function as it will be explained hereinafter.

In case of regular operation of the resetting apparatus 1, the member 14 makes the eccentric member 10 integral with the shaft of the motor reducer 20 for the transmission of a corresponding torque, for example clockwise as represented in figure 7B.

In case the resetting apparatus 1 is not working, for example if the eccentric member 10 has not yet finished to complete its rotation around the keying axis and a condition of substantial stall arises, the member 14 allows the rotation of the eccentric member 10 in the opposite direction, in the case in point in the counterclockwise direction.

In this way the free switching of the switch 12 is allowed, for example in case a failure of the electric system takes place due to a short circuit.

As exemplified in figure 9, the advantageous use of a particular frequency band, preferably comprised between 868,0 and 868,6 MHz, especially suitable to the reception and transmission of signals with radio-frequency for the apparatus 1, allows to carry out the resetting of the device 100 even in huge buildings, when the distance between the two units 2 and 3 is great and there are considerable interposed physical obstacles.

According to an additional embodiment of the resetting apparatus 1, the control unit can comprise components of programmable logic apt to arrange the automatic resetting of the device 100, if the detecting means mentioned above detects the unset state "b" thereof.

According to such operating mode, it is also provided that, after a given pre-set number of attempts, the control unit 3 is apt to transmit however a warning signal F1 to the peripheral unit 2 for the selective resetting by a user 200.

It is also provided the case that the above-mentioned first and second means for the mutual reception and transmission of signals, respectively, from and towards the peripheral unit 2 and the control unit 3, are of the wiring connection type.

For example, telephone pairs, coaxial cables or optical fibres can be used.

The present invention has been described sofar according to a preferred embodiment thereof, shown by way of example and not for limitative purposes.

It is to be meant that other embodiments can be provided, all belonging to the protection scope of the same, as defined by the enclosed claims.

## Claims

1. Apparatus (1) for the remote resetting of a device (100) for interrupting the electric energy supplied by a main supply mains, said device (100) being apt to switch between a first reset state (a) and a second unset state (b), comprising:
- a first peripheral unit (2) for remotely controlling the resetting of said device (100);
- a second control unit (3), arranged at said device (100) and in bi-directional communication with said control peripheral unit (2), comprising:
- means (90, 11) for detecting the state of said device (100); and
- means (10, 11, 13,14, 20) for resetting said device (100),
said peripheral unit (2) further comprising:
• first means (4, 6) for receiving a warning signal (F1) and transmitting a corresponding resetting signal (F2), respectively from and towards second means (5, 7) for the transmission and reception of said control unit (3); and
• means (30) for activating said transmission means (4, 6),
**characterized in that**, whenever said detecting means (90, 11) detects the unset state (b) of said
device (100), said control unit (3) emits said warning signal (F1) and transmits it to said peripheral unit (2), so that said means (30) for activating said transmission means (4, 6) can be selectively operated by a user (200) to arrange the resetting of said device (100) by means of the transmission to said control unit (3) of said corresponding reset signal (F2);
the overall configuration being so that, when the interruption device (100) is in the reset state (a), said resetting means (10, 11, 13,14, 20) however allows the free switching of said device (100).

2. Resetting apparatus (1) according to claim 1, wherein said first and second means for receiving and transmitting said signals are of the wiring connection kind.

3. Resetting apparatus (1) according to claim 1, wherein said first and second means (4, 6, 5, 7) for receiving and transmitting said signals (F1, F2) are of the radio-frequency type.

4. Resetting apparatus (1) according to claim 3, wherein said transmission of radio-frequency signals (F1, F2) is encoded so as to be activated selectively, in order to avoid interferences with other apparatuses of the same kind operating within the radio range.

5. Resetting apparatus (1) according to claim 4, wherein said encoding takes place by means of the preventive programming of said control unit (3) and of said peripheral unit (2), by assigning a respective identification code to said peripheral unit (2).

6. Resetting apparatus (1) according to anyone of the preceding claims, wherein said peripheral unit (2) comprises means for the visual signalling (40) of the reset state (a) or unset state (b) of said device (100).

7. Resetting apparatus (1) according to anyone of the preceding claims, wherein said peripheral unit (2) further comprises means for the acoustic signalling (50) of the reset state (a) or the unset state (b) of said device (100).

8. Resetting apparatus (1) according to anyone of the preceding claims, wherein said peripheral unit (2) and said control unit (3) are power-supplied by an external supply mains.

9. Resetting apparatus (1) according to anyone of the preceding claims, wherein said peripheral unit (2) and said control unit (3) comprise respective battery-supplied means (8, 9).

10. Resetting apparatus (1) according to the preceding claim, wherein said battery-supplied means (8, 9) is of the buffer kind, in case the power supply from the main source is temporary interrupted.

11. Resetting apparatus (1) according to anyone of the claims 9 or 10, wherein said peripheral unit (2) and said control unit (3) comprise respective means for the acoustic signalling of the exhaustion of said battery-supplied means (8, 9).

12. Resetting apparatus (1) according to anyone of the preceding claims, wherein said activating means comprises a switch (30).

13. Resetting apparatus (1) according to the preceding claim, wherein said activating means (30) further comprises a biometric sensor.

14. Resetting apparatus (1) according to claim 12 or 13, wherein said activating means (30) further comprises an electronic key.

15. Resetting apparatus (1) according to anyone of the claims from 12 to 14, wherein said activating means (30) further comprises a phone combiner connected to a telecommunication radio-mobile network of mobile kind.

16. Resetting apparatus (1) according to the preceding claim, wherein said combiner is apt to establish a communication with a mobile terminal, so that a user (200) can arrange the resetting of said device (100) by means of said mobile terminal.

17. Resetting apparatus (1) according to anyone of the claims from 12 to 16, wherein said activating means (30) comprises means for the connection to the Internet network, apt to send a resetting signal (F2) of said device (100), said resetting signal (F2) having been remotely controlled by means of said Internet network.

18. Resetting apparatus (1) according to anyone of the preceding claims, wherein said control unit (3) is arranged in a lifted position with respect said device (100).

19. Resetting apparatus (1) according to anyone of the preceding claims, wherein said control unit (3) is arranged onto a resting base (110) located on a surface of said device (100), said resting base (110) being electro-magnetically shielded with respect to said device (100).

20. Resetting apparatus (1) according to anyone of the preceding claims, wherein said control unit (3) comprises a turn-on and turn-off switch (60), for the temporary interruption of the operation of said control unit (3).

21. Resetting apparatus (1) according to anyone of the preceding claims, wherein said control unit (3) comprises a device (70) for signalling the operating state of said control unit (3).

22. Resetting apparatus (1) according to anyone of the preceding claims, wherein said control unit (3) comprises a test button (80), to verify the correct operation of said resetting apparatus (1).

23. Resetting apparatus according to anyone of the preceding claims, wherein said resetting means (10, 11, 13, 14, 20) on said control unit (3) comprises a motor reducer (20).

24. Resetting apparatus (1) according to the preceding claim, wherein said resetting means (10, 11, 13, 14, 20) on said control unit (3) comprises an eccentric member (10) substantially shaped like a cam, keyed on a rotating shaft of said motor reducer (20).

25. Resetting apparatus (1) according to the preceding claim, wherein said resetting means (10, 11, 13, 14, 20) on said control unit (3) comprises connection means (13), revolvingly assembled between a first end constrained on a switch (12) of said device (100) and a second end constrained on said eccentric member (10), so that said eccentric member (10) transforms the rotating motion of said shaft into alternative motion of said connection means (13).

26. Resetting apparatus (1) according to claim 25, wherein said connection means (13) is of the kind with stretched cable.

27. Resetting apparatus (1) according to claim 25, wherein said connection means (13) is of the kind with stiff rod.

28. Resetting apparatus (1) according to anyone of the claims from 24 to 27, wherein said means (90, 11) for detecting the state of said device (100) comprises an electro-mechanical sensor (11) apt to cooperate with a contact tooth (90) integrated in said eccentric member (10), so as to implement the closure or the opening of a circuit for detecting the state of said device (100), respectively when said tooth (90) is in contact with said sensor (11) and when said tooth is detached from said sensor (11).

29. Resetting apparatus (1) according to the preceding claim, wherein said detecting circuit is in the closed condition when said device (100) is in the reset state (a).

30. Resetting apparatus (1) according to the preceding claim, wherein said electro-mechanical sensor (11) is apt to activate the transmission of said warning signal (F1) to said peripheral unit (2), when said detecting circuit switches from the closed to the open condition.

31. Resetting apparatus (1) according to anyone of the claims from 24 to 30, wherein said eccentric member (10) is keyed on said shaft of said motor reducer (20), by means of a member with mono-directional bearing (14), apt to make said eccentric member (10) integral with said shaft for the transmission of a corresponding torque when the resetting apparatus (1) is working; and at the same time it is apt to allow the rotation of said eccentric member (10) in the opposite direction to allow however the free switching of said switch (12) when instead the resetting apparatus (1) is not working.

32. Resetting apparatus (1) according to anyone of the preceding claims, wherein said control unit (3) comprises components of programmable logic apt to arrange the automatic resetting of said interrupting device (100), if said detecting means (90, 11) verifies the unset state of said interrupting device (100).

33. Resetting apparatus (1) according to the preceding claim, wherein after a given number of attempts at automatic resetting, said control unit (3) is apt to transmit a proportional warning signal (F1) to said peripheral unit (2) for the selective resetting by said user (200).

## Patentansprüche

1. Gerät (1) für die Fernrücksetzung einer Vorrichtung (100) zur Unterbrechung der von einem Hauptversorgungsnetz bereitgestellten elektrischen Energie, wobei die Vorrichtung (100) in der Lage ist, zwischen einem ersten Rücksetzzustand (a) und einem zweiten ungesetzten Zustand (b) umzuschalten, wobei das Gerät Folgendes aufweist:
eine erste periphere Einheit (2) zur Fernsteuerung der Rücksetzung der Vorrichtung (100);
eine zweite Steuereinheit (3), welche bei der Vorrichtung (100) angeordnet ist und in bidirektionaler Kommunikation mit der peripheren Steuereinheit (2) steht, wobei die Steuereinheit (3) Folgendes aufweist:
eine Einrichtung (90, 11) zur Erfassung des Zustands der Vorrichtung (100); und
eine Einrichtung (10, 11, 13, 14, 20) zur Rücksetzung der Vorrichtung (100), wobei die periphere Einheit (2) des Weiteren Folgendes aufweist:
- eine erste Einrichtung (4, 6) zum Empfang eines Warnsignals (F1) und zur Übertragung eines entsprechenden Rücksetzsignals (F2) von bzw. an eine zweite Einrichtung (5, 7) für die Übertragung und den Empfang der Steuereinheit (3); und
- eine Einrichtung (30) zur Aktivierung der Übertragungsvorrichtung (4, 6);
**dadurch gekennzeichnet,**
**dass** immer wenn die Erfassungsvorrichtung (90, 11) den ungesetzten Zustand (b) der Vorrichtung (100) erfasst, die Steuereinheit (3) das Warnsignal (F1) auslöst und dieses an die periphere Einheit (2) überträgt, so dass die Einrichtung (30) zur Aktivierung der Übertragungsvorrichtung (4, 6) von einem Benutzer (200) wahlweise betrieben werden kann, um die Rücksetzung der Vorrichtung (100) mit Hilfe der Übertragung des entsprechenden Rücksetzsignals (F2) an die Steuereinheit (3) durchzuführen;
**dass** die Gesamtkonfiguration derart ausgelegt ist, dass wenn sich die Unterbrechungsvorrichtung (100) in dem Rücksetzzustand (a) befindet, die Rücksetzeinrichtung (10, 11, 13, 14, 20) jedoch die freie Umschaltung der Vorrichtung (100) ermöglicht.

2. Rücksetzgerät (1) nach Anspruch 1, **dadurch gekennzeichnet, dass** die erste und zweite Einrichtung für den Empfang und die Übertragung der Signale vom Drahtverbindungstyp sind.

3. Rücksetzgerät (1) nach Anspruch 1, **dadurch gekennzeichnet, dass** die erste und zweite Einrichtung (4, 6, 5, 7) für den Empfang und die Übertragung der Signale (F1, F2) vom Funkfrequenztyp sind.

4. Rücksetzgerät (1) nach Anspruch 3, **dadurch gekennzeichnet, dass** die Übertragung von Funkfrequenzsignalen (F1, F2) codiert ist, so dass sie wahlweise aktiviert wird, um Interferenzen mit anderen Geräten derselben Art, welche in dem Funkbereich arbeiten, zu vermeiden.

5. Rücksetzgerät (1) nach Anspruch 4, **dadurch gekennzeichnet, dass** die Codierung durch die vorsorgliche Programmierung der Steuereinheit (3) und der peripheren Einheit (2) erfolgt, indem der peripheren Einheit (2) ein jeweiliger Identifizierungscode zugeordnet wird.

6. Rücksetzgerät (1) nach einem der vorhergehenden Ansprüche, **dadurch gekennzeichnet, dass** die periphere Einheit (2) eine Einrichtung für die visuelle Signalisierung (40) des rückgesetzten Zustands (a) oder des ungesetzten Zustands (b) der Vorrichtung (100) aufweist.

7. Rücksetzgerät (1) nach einem der vorhergehenden Ansprüche, **dadurch gekennzeichnet, dass** die periphere Einheit (2) des Weiteren eine Einrichtung für die akustische Signalisierung (50) des rückgesetzten Zustands (a) oder des ungesetzten Zu-stands (b) der Vorrichtung (100) aufweist.

8. Rücksetzgerät (1) nach einem der vorhergehenden Ansprüche, **dadurch gekennzeichnet, dass** die periphere Einheit (2) und die Steuereinheit (3) von einem externen Versorgungsstromnetz mit Strom versorgt werden.

9. Rücksetzgerät (1) nach einem der vorhergehenden Ansprüche, **dadurch gekennzeichnet, dass** die periphere Einheit (2) und die Steuereinheit (3) jeweilige batterieversorgte Einrichtungen (8, 9) aufweisen.

10. Rücksetzgerät (1) nach dem vorhergehenden Anspruch, **dadurch gekennzeichnet, dass** die batterieversorgte Einrichtung (8, 9) vom Zwischenspeicher- bzw. Reservetyp ist, im Falle, dass die Stromversorgung von der Hauptquelle temporär unterbrochen ist.

11. Rücksetzgerät (1) nach einem der vorhergehenden Ansprüche 9 oder 10, **dadurch gekennzeichnet, dass** die periphere Einheit (2) und die Steuereinheit (3) jeweilige Einrichtungen für die akustische Signalisierung des Verbrauchtseins der batterieversorgten Einrichtung (8, 9) aufweisen.

12. Rücksetzgerät (1) nach einem der vorhergehenden Ansprüche, **dadurch gekennzeichnet, dass** die Aktivierungseinrichtung einen Schalter (30) aufweist.

13. Rücksetzgerät (1) nach dem vorhergehenden Anspruch, **dadurch gekennzeichnet, dass** die Aktivierungseinrichtung (30) des Weiteren einen biometrischen Sensor aufweist.

14. Rücksetzgerät (1) nach Anspruch 12 oder 13, **dadurch gekennzeichnet, dass** die Aktivierungseinrichtung (30) des Weiteren einen elektronischen Schlüssel aufweist.

15. Rücksetzgerät (1) nach einem der Ansprüche 12 bis 14, **dadurch gekennzeichnet, dass** die Aktivierungseinrichtung (30) des Weiteren einen Anruf-Kombinator aufweist, welcher mit einem Telekommunikations-Mobilfunknetz der mobilen Art verbunden ist.

16. Rücksetzgerät (1) nach dem vorhergehenden Anspruch, **dadurch gekennzeichnet, dass** der Kombinator in der Lage ist, eine Kommunikation mit einem mobilen Endgerät herzustellen, so dass ein Benutzer (200) die Rücksetzung der Vorrichtung (100) mit Hilfe des mobilen Endgeräts durchführen kann.

17. Rücksetzgerät (1) nach einem der Ansprüche 12 bis 16, **dadurch gekennzeichnet, dass** die Aktivierungseinrichtung (30) Mittel für die Verbindung mit dem Internet-Netzwerk aufweist, welche in der Lage sind, ein Rücksetzsignal (F2) der Vorrichtung (100) zu senden, wobei das Rücksetzsignal (F2) mit Hilfe des Internet-Netzwerks ferngesteuert worden ist.

18. Rücksetzgerät (1) nach einem der vorhergehenden Ansprüche, **dadurch gekennzeichnet, dass** die Steuereinheit (3) bezüglich der Vorrichtung (100) in einer angehobenen Stellung angeordnet ist.

19. Rücksetzgerät (1) nach einem der vorhergehenden Ansprüche, **dadurch gekennzeichnet, dass** die Steuereinheit (3) auf einer Auflagefläche (110) angeordnet ist, welche auf einer Oberfläche der Vorrichtung (100) positioniert ist, wobei die Auflagefläche (110) bezüglich der Vorrichtung (100) elektromagnetisch abgeschirmt ist.

20. Rücksetzgerät (1) nach einem der vorhergehenden Ansprüche, **dadurch gekennzeichnet, dass** die Steuereinheit (3) einen Ein- und Ausschalter (60) für die temporäre Unterbrechung des Betriebs der Steuereinheit (3) aufweist.

21. Rücksetzgerät (1) nach einem der vorhergehenden Ansprüche, **dadurch gekennzeichnet, dass** die Steuereinheit (3) eine Vorrichtung (70) zur Signalisierung des Betriebszustands der Steuereinheit (3) aufweist.

22. Rücksetzgerät (1) nach einem der vorhergehenden Ansprüche, **dadurch gekennzeichnet, dass** die Steuereinheit (3) einen Prüftaster (80) zur Überprüfung des korrekten Betriebs des Rücksetzgeräts (1) aufweist.

23. Rücksetzgerät (1) nach einem der vorhergehenden Ansprüche, **dadurch gekennzeichnet, dass** die Rücksetzeinrichtung (10, 11, 13, 14, 20) auf der Steuereinheit (3) einen Getriebemotor (20) aufweist.

24. Rücksetzgerät (1) nach dem vorhergehenden Anspruch, **dadurch gekennzeichnet, dass** die Rücksetzeinrichtung (10, 11, 13, 14, 20) auf der Steuereinheit (3) ein im Wesentlichen als Nocken geformtes exzentrisches Bauteil (10) aufweist, welches auf einer Drehwelle des Getriebemotors (20) verkeilt ist.

25. Rücksetzgerät (1) nach dem vorhergehenden Anspruch, **dadurch gekennzeichnet, dass** die Rücksetzeinrichtung (10, 11, 13, 14, 20) auf der Steuereinheit (3) eine Verbindungseinrichtung (13) aufweist, welche umlaufend bzw. drehbar zwischen einem auf einen Schalter (12) der Vorrichtung (100) beschränkten ersten Ende und einem auf das exzentrische Bauteil (10) beschränkten zweiten Ende montiert ist, so dass das exzentrische Bauteil (10) die Drehbewegung der Welle in eine alternative Bewegung der Verbindungseinrichtung (13) umwandelt.

26. Rücksetzgerät (1) nach Anspruch 25, **dadurch gekennzeichnet, dass** die Verbindungseinrichtung (13) von der Art eines gestreckten Kabels ist.

27. Rücksetzgerät (1) nach Anspruch 25, **dadurch gekennzeichnet, dass** die Verbindungseinrichtung (13) von der Art einer starren Stange ist.

28. Rücksetzgerät (1) nach einem der Ansprüche 24 bis 27, **dadurch gekennzeichnet, dass** die Einrichtung (90, 11) zur Erfassung des Zustands der Vorrichtung (100) einen elektromagnetischen Sensor (11) aufweist, welcher in der Lage ist, mit einem in dem exzentrischen Bauteil (10) integrierten Kontaktzinken (90) zusammenzuwirken, so dass die Schließung bzw. Öffnung eines Schaltkreises zur Erfassung des Zustands der Vorrichtung (100) implementiert wird, wenn der Zinken (90) in Kontakt mit dem Sensor (11) ist und wenn der Zinken von dem Sensor (11) entkoppelt ist.

29. Rücksetzgerät (1) nach dem vorhergehenden Anspruch, **dadurch gekennzeichnet, dass** sich der Erfassungsschaltkreis in dem geschlossenen Zustand befindet, wenn sich die Vorrichtung (100) im rückgesetzten Zustand (a) befindet.

30. Rücksetzgerät (1) nach dem vorhergehenden Anspruch, **dadurch gekennzeichnet, dass** der elektromagnetische Sensor (11) in der Lage ist, die Übertragung des Warnsignals (F1) an die periphere Einheit (2) zu aktivieren, wenn die Erfassungsvorrichtung von dem geschlossenen in den offenen Zustand umschaltet.

31. Rücksetzgerät (1) nach einem der Ansprüche 24 bis 30, **dadurch gekennzeichnet, dass** das exzentrische Bauteil (10) auf der Welle des Getriebemotors (20) mit Hilfe eines Bauteils mit monodirektionaler Auflage (14) verkeilt ist, welches in der Lage ist, das exzentrische Bauteil (10) einstückig bzw. integral mit der Welle zur Übertragung eines entsprechenden Drehmoments herzustellen, sobald das Rücksetzgerät (1) arbeitet; und welches gleichzeitig in der Lage ist, die Drehung des exzentrischen Bauteils (10) in die entgegengesetzte Richtung zu ermöglichen, wobei jedoch die freie Umschaltung des Schalters (12) möglich ist, wenn das Rücksetzgerät (1) anstatt dessen nicht arbeitet.

32. Rücksetzgerät (1) nach einem der vorhergehenden Ansprüche, **dadurch gekennzeichnet, dass** die Steuereinheit (3) Bauteile programmierbarer Logik aufweist, welche in der Lage sind, die automatische Rücksetzung der Unterbrechungsvorrichtung (100) durchzuführen, falls die Erfassungseinrichtung (90, 11) den ungesetzten Zustand der Unterbrechungsvorrichtung (100) verifiziert bzw. bestätigt.

33. Rücksetzgerät (1) nach dem vorhergehenden Anspruch, **dadurch gekennzeichnet, dass** nach einer vorgegebenen Anzahl von Versuchen zur automatischen Rücksetzung die Steuereinheit (3) in der Lage ist, ein proportionales Warnsignal (F1) an die periphere Einheit (2) zur wahlweisen Rücksetzung durch den Benutzer (200) zu übertragen.

## Revendications

1. Appareil (1) pour la réinitialisation à distance d'un dispositif (100) pour interrompre l'énergie électrique fournie par une alimentation secteur, ledit dispositif (100) étant capable de commuter entre un premier état réinitialisé (a) et un deuxième état non initialisé (b), comprenant :
- une première unité périphérique (2) pour commander à distance la réinitialisation dudit dispositif (100) ;
- une deuxième unité de commande (3), agencée au niveau dudit dispositif (100) et en communication bidirectionnelle avec ladite unité périphérique de commande (2), comprenant :
- des moyens (90, 11) pour détecter l'état dudit dispositif (100) ; et
- des moyens (10, 11, 13, 14, 20) pour réinitialiser ledit dispositif (100), ladite unité périphérique (2) comprenant en outre :
. des premiers moyens (4, 6) pour recevoir un signal d'avertissement (F1) et transmettre un signal de réinitialisation correspondant (F2), respectivement à partir et vers des deuxièmes moyens (5, 7) pour la transmission et la réception de ladite unité de commande (3) ; et
. des moyens (30) pour activer lesdits moyens de transmission (4, 6), **caractérisé en ce que**, quand lesdits moyens de détection (90, 11) détectent l'état non initialisé (b) dudit dispositif (100), ladite unité de commande (3) émet ledit signal d'avertissement (F1) et le transmet à ladite unité périphérique (2), de sorte que lesdits moyens (30) pour activer lesdits moyens de transmission (4, 6) puissent être mis en oeuvre de manière sélective par un utilisateur (200) pour agencer la réinitialisation dudit dispositif (100) au moyen de la transmission à ladite unité de commande (3) dudit signal de réinitialisation correspondant (F2) ;
la configuration globale étant telle que, lorsque le dispositif d'interruption (100) est dans l'état réinitialisé (a), lesdits moyens de réinitialisation (10, 11, 13, 14, 20) permettent cependant la commutation libre dudit dispositif (100).

2. Appareil de réinitialisation (1) selon la revendication 1, dans lequel lesdits premiers et deuxièmes moyens pour recevoir et transmettre lesdits signaux sont du type à connexion câblée.

3. Appareil de réinitialisation (1) selon la revendication 1, dans lequel lesdits premiers et deuxièmes moyens (4, 6, 5, 7) pour recevoir et transmettre lesdits signaux (F1, F2) sont du type radiofréquence.

4. Appareil de réinitialisation (1) selon la revendication 3, dans lequel ladite transmission de signaux radiofréquences (F1, F2) est encodée de manière à être activée de manière sélective, afin d'éviter des interférences avec d'autres appareils du même type fonctionnant dans la plage radio.

5. Appareil de réinitialisation (1) selon la revendication 4, dans lequel ledit encodage a lieu au moyen de la programmation préventive de ladite unité de commande (3) et de ladite unité périphérique (2), en attribuant un code d'identification respectif à ladite unité périphérique (2).

6. Appareil de réinitialisation (1) selon l'une quelconque des revendications précédentes, dans lequel ladite unité périphérique (2) comprend des moyens pour la signalisation visuelle (40) de l'état réinitialisé (a) ou de l'état non initialisé (b) dudit dispositif (100).

7. Appareil de réinitialisation (1) selon l'une quelconque des revendications précédentes, dans lequel ladite unité périphérique (2) comprend en outre des moyens pour la signalisation acoustique (50) de l'état réinitialisé (a) ou de l'état non initialisé (b) dudit dispositif (100).

8. Appareil de réinitialisation (1) selon l'une quelconque des revendications précédentes, dans lequel ladite unité périphérique (2) et ladite unité de commande (3) sont alimentées par une alimentation secteur externe.

9. Appareil de réinitialisation (1) selon l'une quelconque des revendications précédentes, dans lequel ladite unité périphérique (2) et ladite unité de commande (3) comprennent des moyens alimentés par batterie (8, 9) respectifs.

10. Appareil de réinitialisation (1) selon la revendication précédente, dans lequel lesdits moyens alimentés par batterie (8, 9) sont du type tampon, dans le cas où l'alimentation à partir de la source principale est temporairement interrompue.

11. Appareil de réinitialisation (1) selon l'une quelconque des revendications 9 et 10, dans lequel ladite unité périphérique (2) et ladite unité de commande (3) comprennent des moyens respectifs pour la signalisation acoustique de l'épuisement desdits moyens alimentés par batterie (8, 9).

12. Appareil de réinitialisation (1) selon l'une quelconque des revendications précédentes, dans lequel lesdits moyens d'activation comprennent un commutateur (30).

13. Appareil de réinitialisation (1) selon la revendication précédente, dans lequel lesdits moyens d'activation (30) comprennent en outre un capteur biométrique.

14. Appareil de réinitialisation (1) selon la revendication 12 ou 13, dans lequel lesdits moyens d'activation (30) comprennent en outre une clé électronique.

15. Appareil de réinitialisation (1) selon l'une quelconque des revendications 12 à 14, dans lequel lesdits moyens d'activation (30) comprennent en outre un combineur téléphonique connecté à un réseau de télécommunication radio mobile du type mobile.

16. Appareil de réinitialisation (1) selon la revendication précédente, dans lequel ledit combineur est capable d'établir une communication avec un terminal mobile, de sorte qu'un utilisateur (200) puisse agencer ladite réinitialisation dudit dispositif (100) au moyen dudit terminal mobile.

17. Appareil de réinitialisation (1) selon l'une quelconque des revendications 12 à 16, dans lequel lesdits moyens d'activation (30) comprennent des moyens pour la connexion au réseau Internet, capables d'envoyer un signal de réinitialisation (F2) dudit dispositif (100), ledit signal de réinitialisation (F2) ayant été commandé à distance au moyen dudit réseau Internet.

18. Appareil de réinitialisation (1) selon l'une quelconque des revendications précédentes, dans lequel ladite unité de commande (3) est agencée à une position élevée par rapport audit dispositif (100).

19. Appareil de réinitialisation (1) selon l'une quelconque des revendications précédentes, dans lequel ladite unité de commande (3) est agencée sur une base de support (110) située sur une surface dudit dispositif (100), ladite base de support (110) étant blindée électro-magnétiquement par rapport audit dispositif (100).

20. Appareil de réinitialisation (1) selon l'une quelconque des revendications précédentes, dans lequel ladite unité de commande (3) comprend un commutateur de mise en marche et d'arrêt (60), pour l'interruption temporaire du fonctionnement de ladite unité de commande (3).

21. Appareil de réinitialisation (1) selon l'une quelconque des revendications précédentes, dans lequel ladite unité de commande (3) comprend un dispositif (70) pour signaler l'état de fonctionnement de ladite unité de commande (3).

22. Appareil de réinitialisation (1) selon l'une quelconque des revendications précédentes, dans lequel ladite unité de commande (3) comprend un bouton de test (80), pour vérifier le fonctionnement correct dudit appareil de réinitialisation (1).

23. Appareil de réinitialisation selon l'une quelconque des revendications précédentes, dans lequel lesdits moyens de réinitialisation (10, 11, 13, 14, 20) sur ladite unité de commande (3) comprennent un moto-réducteur (20).

24. Appareil de réinitialisation (1) selon la revendication précédente, dans lequel lesdits moyens de réinitialisation (10, 11, 13, 14, 20) sur ladite unité de commande (3) comprennent un élément excentrique (10) sensiblement en forme de came, claveté sur un arbre rotatif dudit moto-réducteur (20).

25. Appareil de réinitialisation (1) selon la revendication précédente, dans lequel lesdits moyens de réinitialisation (10, 11, 13, 14, 20) sur ladite unité de commande (3) comprennent des moyens de connexion (13), assemblés en rotation entre une première extrémité contrainte sur un commutateur (12) dudit dispositif (100) et une deuxième extrémité contrainte sur ledit élément excentrique (10), de sorte que ledit élément excentrique (10) transforme le mouvement de rotation dudit arbre en un mouvement alternatif desdits moyens de connexion (13).

26. Appareil de réinitialisation (1) selon la revendication 25, dans lequel lesdits moyens de connexion (13) sont du type avec câble étiré.

27. Appareil de réinitialisation (1) selon la revendication 25, dans lequel lesdits moyens de connexion (13) sont du type avec tige rigide.

28. Appareil de réinitialisation (1) selon l'une quelconque des revendications 24 à 27, dans lequel lesdits moyens (90, 11) pour détecter l'état dudit dispositif (100) comprennent un capteur électro-mécanique (11) capable de coopérer avec une dent de contact (90) intégrée dans ledit élément excentrique (10), de manière à réaliser la fermeture ou l'ouverture d'un circuit pour détecter l'état dudit dispositif (100), respectivement lorsque ladite dent (90) est en contact avec ledit capteur (11) et lorsque ladite dent est séparée dudit capteur (11).

29. Appareil de réinitialisation (1) selon la revendication précédente, dans lequel ledit circuit de détection est dans la condition fermée lorsque ledit dispositif (100) est dans l'état réinitialisé (a).

30. Appareil de réinitialisation (1) selon la revendication précédente, dans lequel ledit capteur électro-mécanique (11) est capable d'activer la transmission dudit signal d'avertissement (F1) à ladite unité périphérique (2), lorsque ledit circuit de détection commute de la condition fermée vers la condition ouverte.

31. Appareil de réinitialisation (1) selon l'une quelconque des revendications 24 à 30, dans lequel ledit élément excentrique (10) est claveté sur ledit arbre dudit moto-réducteur (20), au moyen d'un élément avec un palier unidirectionnel (14), capable de rendre ledit élément excentrique (10) d'un seul tenant avec ledit arbre pour la transmission d'un couple correspondant lorsque l'appareil de réinitialisation (1) fonctionne ; et, simultanément, il est capable de permettre la rotation dudit élément excentrique (10) dans la direction opposée pour permettre cependant la commutation libre dudit commutateur (12) lorsque, au lieu de cela, l'appareil de réinitialisation (1) ne fonctionne pas.

32. Appareil de réinitialisation (1) selon l'une quelconque des revendications précédentes, dans lequel ladite unité de commande (3) comprend des composants de logique programmable capables d'agencer la réinitialisation automatique dudit dispositif d'interruption (100), si lesdits moyens de détection (90, 11) vérifient l'état non initialisé dudit dispositif d'interruption (100).

33. Appareil de réinitialisation (1) selon la revendication précédente, dans lequel, après un nombre donné de tentatives de réinitialisation automatique, ladite unité de commande (3) est capable de transmettre un signal d'avertissement proportionnel (F1) à ladite unité périphérique (2) pour la réinitialisation sélective par ledit utilisateur (200).
